# EUROPÄISCHE PATENTSCHRIFT

(11) **EP 3 354 631 B1**
(45) Veröffentlichungstag und Bekanntmachung des Hinweises auf die Patenterteilung: **20.03.2019**
(21) Anmeldenummer: 17153430.8
(22) Anmeldetag: 27.01.2017
(51) Int. Cl.: C04B 35/01, C04B 35/626, C04B 35/04, C04B 35/632, C04B 35/66, C08B 31/08

(54) **VERSATZ ZUR HERSTELLUNG EINES UNGEFORMTEN FEUERFESTEN KERAMISCHEN ERZEUGNISSES UND VERFAHREN ZUR HERSTELLUNG EINES UNGEFORMTEN FEUERFESTEN KERAMISCHEN ERZEUGNISSES**
BATCH COMPOSITION FOR PRODUCING AN UNSHAPED REFRACTORY CERAMIC PRODUCT AND METHOD FOR PRODUCING AN UNSHAPED REFRACTORY CERAMIC OBJECT
MÉLANGE DESTINÉ À FABRIQUER UN PRODUIT EN CÉRAMIQUE REFRACTAIRE NON MOULÉ ET PROCÉDÉ DE FABRICATION D'UN PRODUIT EN CÉRAMIQUE REFRACTAIRE NON MOULÉ

(43) Veröffentlichungstag der Anmeldung: 01.08.2018
(73) Patentinhaber: Refractory Intellectual Property GmbH & Co. KG, 1100 Wien (AT)
(72) Erfinder: Lanzenberger, Ronald, 8793 Gai (AT)
(74) Vertreter: Berkenbrink, Kai-Oliver

(56) Entgegenhaltungen:
- CN-A- 106 270 366
- GB-A- 1 486 352

## Beschreibung

Die Erfindung betrifft einen Versatz zur Herstellung eines ungeformten feuerfesten keramischen Erzeugnisses und ein Verfahren zur Herstellung eines ungeformten feuerfesten keramischen Erzeugnisses.

Der Begriff "feuerfestes keramisches Erzeugnis" im Sinne der Erfindung bezeichnet insbesondere feuerfeste Erzeugnisse mit einer Einsatztemperatur von über 600°C und bevorzugt feuerfeste Werkstoffe gemäß DIN 51060:2000-6, also Werkstoffe mit einem Kegelfallpunkt > SK 17. Die Ermittlung des Kegelfallpunktes kann insbesondere gemäß DIN EN 993-12:1997-06 erfolgen.

Mit einem "Versatz" wird bekanntermaßen eine Zusammensetzung aus einer oder mehreren Komponenten beziehungsweise Rohstoffen bezeichnet, durch die mittels einer Temperaturbehandlung, also insbesondere mittels eines keramischen Brandes, ein feuerfestes keramisches Erzeugnis herstellbar ist.

Feuerfeste keramische Erzeugnisse sind in mehreren Arten bekannt. So können feuerfeste keramische Erzeugnisse in Form von geformten Erzeugnissen, beispielsweise Steinen, vorliegen oder in Form von ungeformten feuerfesten Erzeugnissen, so genannten "Massen".

Im Gegensatz zu geformten feuerfesten Erzeugnissen, die durch eine Formgebung eine bestimmte Geometrie erhalten, werden Versätze zur Herstellung von ungeformten feuerfesten Erzeugnissen ohne eine vorherige Formgebung unmittelbar auf eine Oberfläche an ihrem Verwendungsort in einem mit Temperatur beaufschlagbaren Aggregat, beispielsweise einem Ofen, aufgebracht. Nach einer Trocknung und Erhärtung des ungeformten Versatzes wird dieser durch ein Aufheizen des Aggregates mit Temperatur beaufschlagt und bildet dabei ein feuerfestes keramisches Erzeugnis aus.

Ungeformte feuerfeste keramische Erzeugnisse sind auch in Form sogenannter Spritzmassen bekannt. Spritzmassen dienen zur Pflege und Reparatur von Bereichen der feuerfesten Zustellung eines Ofens, in denen die feuerfeste Zustellung einem besonderen Verschleiß unterliegt. Insbesondere dienen Spritzmassen der Pflege und Reparatur der feuerfesten Zustellung von Ofenaggregaten im Stahlwerk, beispielsweise Konvertern, Pfannen oder Tundishs.

Bei der Anwendung einer Spritzmasse wird der zur Herstellung der Spritzmasse zur Verfügung gestellte Versatz mit Wasser vermischt und anschließend auf den zu pflegenden oder reparierenden Bereich der feuerfesten Zustellung des Ofens aufgespritzt.

Um Spritzmassen auf die feuerfeste Zustellung eines Ofens aufzuspritzen, werden insbesondere Spritzmaschinen oder Schleudermaschinen verwendet. Bei der Verwendung von Spritzmaschinen wird der trockene Versatz zunächst über einen Schlauch mittels Pressluft in eine Spritzlanze befördert, wo der Versatz mit Wasser vermischt wird. Der entsprechend mit Wasser vermischte Versatz wird anschließend über die Lanze auf die zu reparierenden oder pflegenden Bereiche der feuerfesten Zustellung des Ofens aufgespritzt. Bei der Verwendung von Schleudermaschinen wird der trockene Versatz ebenfalls zunächst mit Wasser vermischt und anschließend auf ein horizontales Schleuderrad transportiert, das den mit Wasser vermischten Versatz an die zu reparierenden beziehungsweise pflegenden Bereiche der feuerfesten Zustellung des Ofens schleudert beziehungsweise spritzt.

Grundsätzlich haben sich Spritzmassen zur Pflege und Reparatur von hoch beanspruchten Ofenbereichen bewährt. Problematisch bei der Verwendung von Spritzmassen ist jedoch regelmäßig der mechanische Rückprall, den die Spritzmassen beim Auftreffen auf die zu pflegende oder reparierende Oberfläche des Ofens erfahren. Auf Grund dieses Rückpralls können sich erhebliche Anteile der auf die Oberfläche aufgespritzten Spritzmasse lösen und in das Ofenaggregat fallen. Diese Anteile der rückprallenden Spritzmasse, die bis zu 30% der aufgespritzten Spritzmasse betragen können, stehen anschließend nicht weiter für die Reparatur oder Pflege des Ofens zur Verfügung. Insbesondere unter Kostengesichtspunkten ist der Rückprall von Spritzmassen daher nachteilig.

Es hat daher nicht an Versuchen gefehlt, Technologien zur Verfügung zu stellen, durch die der Rückprall von Spritzmassen reduziert werden kann. Ein besonderes Augenmerk wird dabei insbesondere auf die Korngröße der Komponenten des Versatzes der Spritzmasse gelegt, da es sich gezeigt hat, dass die Korngröße der Komponenten einen Einfluss auf das Rückprallverhalten der Spritzmasse haben kann. Allerdings kann der Rückprall von Spritzmassen allein durch eine bestimmte Korngröße in vielen Fällen nicht in einem gewünschten Umfang reduziert werden.

Insbesondere kann zur Reduzierung des Rückpralls einer Spritzmasse die Korngröße der Komponenten auch nicht beliebig verändert werden, da die Korngröße der Komponenten der Spritzmasse auch einen wesentlichen Einfluss auf die Sintereigenschaften der Spritzmasse hat.

Der Erfindung liegt die Aufgabe zugrunde, einen Versatz zur Herstellung eines ungeformten feuerfesten keramischen Erzeugnisses, insbesondere eines ungeformten feuerfesten keramischen Erzeugnisses in Form einer Spritzmasse, zur Verfügung zu stellen, welche einen geringen Rückprall aufweist. Insbesondere soll das Rückprallverhalten der Spritzmasse unabhängig sein von der Korngröße der Versatzkomponenten. Ferner solle der Versatz eine gute Ersthaftung, also eine gute Anhaftung auf den zu reparierenden Bereichen aufweisen. Ferner soll der Versatz gute Sintereigenschaften aufweisen.

Zur Lösung dieser Aufgabe wird zur Verfügung gestellt ein Versatz zur Herstellung eines ungeformten feuerfesten keramischen Erzeugnisses, welcher die folgenden Merkmale aufweist:
Der Versatz umfasst die folgenden Komponenten:
- wenigstens 60 Masse-% einer Grundkomponente in Form wenigstens eines Rohstoffes auf Basis Magnesia;
- eine Komponente in Form wenigstens eines chemisch modifizierten Stärkeethers;
- eine Komponente in Form wenigstens eines wasserlöslichen chemischen Bindemittels;
der Versatz umfasst die folgenden Stoffe in den folgenden Massenanteilen:
- unter 10 Masse-% Calciumoxid;
- unter 10 Masse-% Kohlenstoff.

Überraschend hat sich erfindungsgemäß herausgestellt, dass der erfindungsgemäße Versatz bei dessen Verwendung als Spritzmasse nur einen geringen Rückprall aufweist. Insbesondere hat sich erfindungsgemäß herausgestellt, dass durch einen erfindungsgemäßen Versatz eine Spritzmasse herstellbar ist, die gegenüber Spritzmassen nach dem Stand der Technik, bei welchen das Rückprallverhalten über die Korngröße eingestellt ist, ein erheblich verbessertes Rückprallverhalten aufweist. Ferner weist der Versatz eine gute Ersthaftung auf. Ferner weist der erfindungsgemäße Versatz gute Sintereigenschaften auf.

Der erfindungsgemäße Versatz dient zur Herstellung eines ungeformten feuerfesten keramischen Erzeugnisses in Form eines basischen ungeformten feuerfesten keramischen Erzeugnisses, insbesondere zur Herstellung einer basischen Spritzmasse. Insbesondere dient der erfindungsgemäße Versatz zur Herstellung einer gesinterten basischen Spritzmasse.

Der erfindungsgemäße Versatz basiert auf einer feuerfesten Grundkomponente in Form wenigstens eines Rohstoffes auf Basis Magnesia (also Magnesiumoxid, MgO). Bevorzugt ist der wenigsten eine Rohstoff auf Basis Magnesia des erfindungsgemäßen Versatzes wenigstens einer der folgenden Rohstoffe: Sintermagnesia oder Schmelzmagnesia. Besonders bevorzugt liegt die Grundkomponente in Form von Sintermagnesia vor.

Bevorzugt liegt die Grundkomponente in einer Korngröße von höchstens 5 mm vor. Besonders bevorzugt liegt die Grundkomponente zu 100 Masse-%, bezogen auf die Gesamtmasse der Grundkomponente, in einer Korngröße von höchstens 5 mm oder von höchstens 3 mm vor. Die Korngröße kann insbesondere bestimmt sein gemäß DIN 66165-1:2015-10.

Die Grundkomponente liegt im Versatz in einem Anteil von wenigstens 60 Masse-% vor, bezogen auf die Gesamtmasse des Versatzes, also beispielsweise auch in einem Anteil von wenigstens 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91 oder 92 Masse-%. Bevorzugt liegt die Grundkomponente in einem Anteil von wenigstens 65 Masse-% oder wenigstens 70 Masse-% und besonders bevorzugt in einem Anteil von wenigstens 75, 80 oder 85 Masse-% im Versatz vor.

Sämtliche der hierin gemachten Angaben in Masse-% sind, soweit im Einzelfall nicht anders angegeben, jeweils bezogen auf die Gesamtmasse des Versatzes.

Die Grundkomponente kann beispielsweise in einem Anteil von höchstens 98 % im Versatz vorliegen, also beispielsweise auch in einem Anteil von höchstens 97, 96, 95, 94 oder 93 Masse-%. Besonders bevorzugt kann die Grundkomponente in einem Anteil von höchstens 97 Masse-% im Versatz vorliegen.

Erfindungsgemäß hat sich überraschend festgestellt, dass der Rückprall einer Spritzmasse drastisch dadurch reduziert werden kann, dass die Spritzmasse einen Anteil an wenigstens einem chemisch modifizierten Stärkeether aufweist. Dabei hat sich herausgestellt, dass die rückprallvermindernde Wirkung des modifizierten Stärkeethers bereits dann eintritt, wenn dieser nur in sehr geringen Anteilen im Versatz vorliegt. Insoweit kann der chemisch modifizierte Stärkeether bereits eine rückprallvermindernde Wirkung in der Spritzmasse entfalten, wenn dieser in einem Anteil von nur wenigsten 0,01 Masse-% vorliegt. Insoweit kann vorgesehen sein, dass die Komponente in Form des wenigstens einen chemisch modifizierten Stärkeethers in einem Anteil von wenigstens 0,01 Masse-% im Versatz vorliegt, also beispielsweise auch in einem Anteil von wenigstens 0,02 oder 0,03 oder 0,04 oder 0,05 oder 0,06 oder 0,07 oder 0,08 oder 0,09 oder 0,10 oder 0,11 oder 0,12 oder wenigstens 0,13 Masse-%.

Ferner wurde erfindungsgemäß festgestellt, dass der Rückprallanteil einer aus dem erfindungsgemäßen Versatz hergestellten Spritzmasse auf unter 15 Masse-% reduzierbar ist, teilweise auch auf unter 10 Masse-%, bezogen auf die aufgespritzte Gesamtmasse einer aus einem erfindungsgemäßen Versatz hergestellten Spritzmasse.

Erfindungsgemäß wurde festegestellt, dass die rückprallvermindernde Wirkung des wenigstens einen modifizierten Stärkeethers in dem Versatz reduziert werden kann, wenn der wenigstens eine modifizierte Stärkeether in einem Anteil über 1,0 Masse-% in dem Versatz vorliegt. Die Erfinder vermuten, dass der wenigstens eine chemisch modifizierte Stärkeether eine Spritzmasse zu sehr eindickt, wenn dieser in Anteilen über 1,0 Masse-% in einem Versatz vorliegt, so dass die Spritzmasse nicht mehr viskos genug ist, um auf der Oberfläche zu haften. Vor diesem Hintergrund ist bevorzugt vorgesehen, dass die Komponente in Form des wenigstens einen chemisch modifizierten Stärkeethers in einem Anteil von höchstens 1,0 Masse-% im Versatz vorliegt, also beispielsweise auch in einem Anteil von höchstens 0,9 oder 0,8 oder 0,7 oder 0,6 oder 0,5 oder 0,4 oder 0,3 oder 0,2 oder 0,18 oder 0,16 oder höchstens 0,15 Masse-%.

Grundsätzlich kann der erfindungsgemäße Versatz einen beliebigen chemisch modifizierten Stärkeether aufweisen. Als Grundstoff des chemisch modifizierten Stärkeethers kann grundsätzlich ein beliebiger Stärkeether vorliegen, beispielsweise wie beschrieben in Römpp Chemielexikon, 9. Auflage, Georg Thieme Verlag, Stuttgart, 1992, ISBN 3-13-735009-3, Seite 4272 unter "Stärkeether". Danach können als Grundstoff des chemisch modifizierten Stärkeethers Stärke-Derivate der allgemeinen Formel 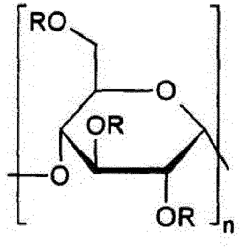 mit R=H, Alkyl oder Aralkyl vorliegen.

Besonders bevorzugt liegt der wenigstens eine chemisch modifizierte Stärkeether in Form wenigstens eines dahingehend chemisch modifizierten Stärkeethers vor, dass ein wie vorstehend ausgeführter Stärkeether wenigstens eine chemische Gruppe aufweist, die aus der folgenden Gruppe ausgewählt ist: Hydroxyalkyl, Carboxyalkyl, Hydroxyalkyl-Carboxyalkyl, Carbamoyl oder Cyanoalkyl.

Insofern kann der wenigstens eine chemisch modifizierte Stärkeether wenigstens einer der folgenden chemisch modifizierten Stärkeether sein: Hydroxyalkyl-Stärkeether, Carboxyalkyl-Stärkeether, Hydroxyalkyl-Carboxyalkyl-Stärkeether, Carbamoyl-Stärkeether oder Cyanoalkyl-Stärkeether. Die Kettenlänge der Alkylgruppe kann insbesondere im Bereich von 1-20 Kohlenstoffatomen liegen, bevorzugt im Bereich von 1-10 Kohlenstoffatomen und besonders bevorzugt im Bereich von 1-5 Kohlenstoffatomen.

Bei der Komponente in Form des wenigstens einen wasserlöslichen chemischen Bindemittels kann es sich um wenigstens ein solches wasserlösliches chemisches Bindemittel handeln, das als wasserlösliches chemisches Bindemittel für Spritzmassen aus dem Stand der Technik bekannt ist, also beispielsweise ein sulfatisches, phosphatisches oder silikatisches Bindemittel. Insofern kann es sich bei dem wenigstens einen wasserlöslichen chemischen Bindemittel beispielsweise um wenigstens eines der folgenden Bindemittel handeln: wenigstens ein wasserlösliches Sulfat, wenigstens ein wasserlösliches Phosphat oder wenigstens ein wasserlösliches Silikat.

Insofern liegen die wasserlöslichen chemischen Bindemittel bevorzugt in Form von anorganischen wasserlöslichen chemischen Bindemitteln vor.

Ein wasserlösliches chemisches Bindemittel in Form eines Silikates kann insbesondere in Form von Wasserglaspulver vorliegen.

Ein wasserlösliches chemisches Bindemittel in Form eines Phosphates kann beispielsweise in Form von Natrium-Polyphosphat vorliegen.

Ein wasserlösliches chemisches Bindemittel in Form eines Sulfates kann beispielsweise in Form wenigstens eines der folgenden Sulfate vorliegen: Aluminium-Sulfat, Natrium-Hydrogensulfat, Bittersalz oder Kieserit.

Besonders bevorzugt liegen als wasserlösliches chemisches Bindemittel wenigstens eines oder beide der folgenden wasserlöslichen chemischen Bindemittel vor: Wasserglaspulver oder Aluminium-Sulfat.

Bekanntermaßen liegt der Zweck wasserlöslicher chemischer Bindemittel in Spritzmassen darin, dass diese nach Zugabe von Wasser chemisch abbinden und dem Versatz beziehungsweise der aus dem Versatz hergestellten Spritzmasse eine gewisse Festigkeit verleihen, bis es auf Grund der Temperaturbeaufschlagung der Spritzmasse zur Versinterung der feuerfesten Grundkomponente und hierdurch zur Ausbildung einer keramischen Bindung kommt.

Die Komponente in Form des wenigstens einen wasserlöslichen chemischen Bindemittels kann beispielsweise in einem Anteil von wenigstens 1 Masse-% im Versatz vorliegen, also beispielsweise auch in einem Anteil von wenigstens 2, 3 oder 4 Masse-%. Ferner kann die Komponente in Form des wenigstens einen wasserlöslichen chemischen Bindemittels in einem Anteil von höchstens 10 Masse-% im Versatz vorliegen, also beispielsweise auch in einem Anteil von höchstens 9, 8, 7 oder 6 Masse-%.

Überraschend hat sich im Rahmen der Erfindung herausgestellt, dass der Rückprall einer aus dem erfindungsgemäßen Versatz hergestellten Spritzmasse mit einem zunehmenden Anteil an Calciumoxid im Versatz zunehmen kann. Insofern ist erfindungsgemäß vorgesehen, dass der erfindungsgemäße Versatz Calciumoxid in einem Anteil von unter 10 Masse-% aufweist. Da der Rückprall einer aus dem erfindungsgemäßen Versatz hergestellten Spritzmasse mit einem abnehmenden Anteil an Calciumoxid abnimmt, kann insbesondere vorgesehen sein, dass der Anteil an Calciumoxid im Versatz auch unter 9, 8, 7, 6, 5, 4, 3, 2 oder unter 1 Masse-% liegt. Bevorzugt liegt der Anteil an Calciumoxid im Versatz unter 9 Masse-%. Besonders bevorzugt liegt der Anteil an Calciumoxid im Versatz unter 8 Masse-%.

Weshalb der Rückprall einer aus dem erfindungsgemäßen Versatz hergestellten Spritzmasse mit einem zunehmenden Anteil an Calciumoxid zunimmt, ist noch nicht vollständig geklärt. Die Erfinder vermuten, dass es zu Reaktionen zwischen Calciumionen und chemisch reaktiven Gruppen des modifizierten Stärkeethers kommt, welche die Verdickungswirkung und damit die rückprallmindernde Wirkung des modifizierten Stärkeethers reduzieren.

Calciumoxid (CaO) kann insbesondere auch über natürliche Verunreinigungen der Grundkomponente in den Versatz eingetragen werden. Soweit die Grundkomponente daher in Form wenigstens eines der Rohstoffe Sintermagnesia oder Schmelzmagnesia vorliegt, kann erfindungsgemäß insbesondere vorgesehen sein, dass die eingesetzte Sintermagnesia oder Schmelzmagnesia Höchstanteile an Calciumoxid aufweist. Insbesondere kann vorgesehen sein, dass die Gesamtmasse an Calciumoxid der Grundkomponente unter 10 Masse-% liegt, also beispielsweise auch unter 9, 8, 7, 6, 5, 4, 3, 2 oder 1 Masse-%, bezogen auf die Gesamtmasse der Grundkomponente.

Aus der Feuerfesttechnologie ist bekannt, dass Anteile an CaO mit Anteilen an Al₂O₃ im Versatz niedrigschmelzende Calciumaluminatphasen und mit Anteilen an MgO und SiO₂ im Versatz niedrigschmelzende Calcium-Magnesiumsilicatphasen bilden können, die die feuerfesten Eigenschaften des aus dem Versatz gebildeten Erzeugnisses nachhaltig verschlechtern können. Daher kann der Versatz wenigstens eine Komponente zur Einstellung der Basizität, also des Verhältnisses von CaO, MgO und SiO₂ zueinander im Versatz, aufweisen. Als solche Komponenten zur Einstellung der Basizität des Versatzes kann der Versatz wenigstens einen der folgenden Rohstoffe aufweisen: Kalkstein (CaCO₃), Dolomit (CaCO₃ • MgCO₃), Doloma (CaO • MgO), Magnesit (MgCO₃) oder Olivin ((Mg, Fe)₂SiO₄). Bevorzugt weist der Versatz zur Einstellung der Basizität wenigstens einen der folgenden Rohstoffe auf: Kalkstein oder Dolomit. Besonders bevorzugt weist der Versatz zur Einstellung der Basizität einen Rohstoffe in Form von Kalkstein auf.

Diese Rohstoffe zur Einstellung der Basizität des Versatzes können beispielsweise in einem Anteil von unter 40 Masse-% im Versatz vorliegen, also beispielsweise auch in einem Anteil von höchstens 39, 35, 30, 25, 20, 19, 18, 17, 16, 15, 14, 13, 12, 11, 10, 9, 8, 7 oder 6 Masse-%. Soweit entsprechende Höchstanteile dieser Rohstoffe im Versatz vorgesehen sind, ist sichergestellt, dass der Anteil an CaO im Versatz unter 9 Masse-% eingestellt werden kann, so dass die Rückpralleigenschaften des Versatzes durch diese weiteren Rohstoffe nicht nachteilig beeinflusst werden. Ferner können die Rohstoffe zur Einstellung der Basizität des Versatzes beispielsweise in einem Anteil von wenigstens 1 Masse-% im Versatz vorliegen, also beispielsweise auch in einem Anteil von wenigstens 2, 3, 4 oder 5 Masse-%. Zur Einstellung einer geeigneten Basizität des Versatzes kann vorgesehen sein, dass die Rohstoffe zur Einstellung der Basizität des Versatzes beispielsweise in einem Anteil von über 1 Masse-% im Versatz vorliegen, also beispielsweise auch in einem Anteil von über 5, 10, 15, 20, 25 oder über 30 Masse-%.

Erfindungsgemäß hat sich herausgestellt, dass die mit einer Zunahme des Anteils an Calciumoxid (CaO) im Versatz einhergehende, zuvor beschriebene Verschlechterung der Eigenschaften des erfindungsgemäßen Versatzes, also insbesondere auch der damit einhergehende vermehrte Rückprall einer aus dem erfindungsgemäßen Versatz hergestellten Spritzmasse, allein abhängt vom Anteil an Calciumoxid (CaO) im Versatz, nicht jedoch vom Anteil an Calciumcarbonat (CaCO₃) im Versatz. Insoweit kann der Versatz beispielsweise auch höhere Anteile an Kalkstein oder Dolomit und geringere Anteile an Doloma aufweisen.

Um die guten Sintereigenschaften des erfindungsgemäßen Versatzes auf Grund etwaiger Oxidationsreaktionen von Kohlenstoff nicht negativ zu beeinflussen, ist erfindungsgemäß vorgesehen, dass der Versatz einen Anteil an Kohlenstoff unter 10 Masse-% aufweist. Insbesondere kann vorgesehen sein, dass der erfindungsgemäße Versatz einen Anteil an Kohlenstoff unter 9, 8, 7, 6, 5, 4, 3, 2 oder 1 Masse-% aufweist.

Bei entsprechend geringen Anteilen an Kohlenstoff im Versatz ist sichergestellt, dass etwaige Oxidationsreaktionen von Kohlenstoff im Versatz dessen Sinterverhalten nicht negativ beeinträchtigen.

"Kohlenstoff" in diesem Sinne ist allein freier Kohlenstoff, also Kohlenstoff, der nicht in Form einer anorganischen oder organischen Verbindung vorliegt. Insofern handelt es sich bei Kohlenstoff im erfindungsgemäßen Sinne beispielsweise um wenigstens einen der Stoffe Graphit oder Ruß.

Nicht um Kohlenstoff in diesem Sinne handelt es sich beispielsweise um Anteile an Kohlenstoff, die über den wenigstens einen chemisch modifizierten Stärkeether in den Versatz eingetragen werden, oder um etwaige, in carbonatischer Form im Versatz vorliegende Anteile an Kohlenstoff, beispielsweise Kohlenstoffanteile in Magnesium- oder Calziumcarbonat.

Um die plastischen Eigenschaften des Versatzes und der daraus herstellbaren Spritzmasse zu beeinflussen, kann der Versatz eine Komponente in Form wenigstens eines Tons aufweisen. Insbesondere kann der Versatz beispielsweise wenigstens einen plastischen Ton aufweisen. Die Verwendung von Ton in Spritzmassen ist bekannt, um die plastischen Eigenschaften von Spritzmassen einzustellen. Insoweit kann auf die aus dem Stand der Technik bekannten Tone zurückgegriffen werden.

Besonders bevorzugt liegt in dem erfindungsgemäßen Versatz ein Ton auf alumosilikatischer Basis vor, also auf Basis der Oxide Al₂O₃ und SiO₂. Insbesondere kann ein Ton auf Basis von Tonmineralen der Kaolingruppe vorliegen.

Eine Komponente in Form wenigstens eines Tons kann in dem erfindungsgemäßen Versatz beispielsweise in einem Anteil von wenigstens 0,1 Masse-% im Versatz vorliegen, also beispielsweise auch in einem Anteil von wenigstens 0,2 oder 0,5 oder 1,0 oder 1,5 oder 2,0 Masse-%. Ferner kann diese Komponente in dem Versatz beispielsweise in einem Anteil von höchstens 5 Masse-% vorliegen, also beispielsweise auch in einem Anteil von höchstens 4,0 oder 3,0 Masse-%.

Der erfindungsgemäße Versatz kann eine Komponente in Form von Fasern aufweisen, insbesondere beispielsweise in Form von organischen Fasern. Die Verwendung von organischen Fasern in Spritzmassen ist bekannt. Organische Fasern dienen in Spritzmassen insbesondere dazu, als Entdampfungshilfe beim Trocknen und Aufheizen zu fungieren. Besonders bevorzugt können in dem erfindungsgemäßen Versatz Fasern in Form von Zellulosefasern vorliegen. Beispielsweise die Komponente in Form von Fasern in einem Anteil von wenigstens 0,05 Masse-% im Versatz vorliegen, also beispielsweise auch in einem Anteil von wenigstens 0,1 oder 0,2 oder 0,3 oder 0,4 Masse-%. Ferner kann diese Komponente beispielsweise in einem Anteil von höchstens 1,0 Masse-% vorliegen, also beispielsweise auch in einem Anteil von höchstens 0,9 oder 0,8 oder 0,7 oder 0,6 Masse-%.

Die Rückprall- und Sintereigenschaften einer aus dem erfindungsgemäßen Versatz hergestellten Spritzmasse können sensibel auf die Anwesenheit von weiteren Komponenten reagieren, die neben den zuvor ausgeführten Komponenten in dem Versatz vorliegen. Daher kann vorgesehen sein, dass der Versatz neben den vorbezeichneten Komponenten, also der Grundkomponente, der Komponente in Form wenigstens eines chemisch modifizierten Stärkeethers, der Komponente in Form wenigstens eines wasserlöslichen chemischen Bindemittels, den Rohstoffen zur Einstellung der Basizität des Versatzes, Ton und Fasern weitere Komponenten nur in einem Anteil unter 10 Masse-% aufweist, also beispielsweise auch in einem Anteil unter 9, 8, 7, 6, 5, 4, 3, 2 oder 1 Masse-%.

Wie zuvor ausgeführt, kann die Grundkomponente insbesondere in Form der Sintermagnesia oder Schmelzmagnesia im Versatz vorliegen, insbesondere in hochreiner Form, so dass über die Rohstoffe auf Basis Magnesia neben Magnesia nur geringe Anteile an weiteren Oxiden in den Versatz eingetragen werden. Insbesondere kann vorgesehen sein, dass die folgenden Oxide in Anteilen unterhalb der nachfolgend angegebenen Massenanteilen im Versatz vorliegen, wobei die einzelnen Oxide einzeln oder in Kombination jeweils unterhalb der angegebenen Massenanteile im Versatz vorliegen können:

| | |
|---|---|
| SiO₂: | unter 10 Masse-%, unter 5 Masse-% oder unter 3 Masse-%; |
| Fe₂O₃: | unter 8 Masse-%, unter 5 Masse-% oder unter 3 Masse-%; |
| Al₂O₃: | unter 3 Masse-%; |
| Cr₂O₃: | unter 2 Masse-% oder unter 1 Masse-%; |
| Na₂O: | unter 2 Masse-% oder unter 1 Masse-%. |

Gegenstand der Erfindung ist auch ein Verfahren zur Herstellung eines ungeformten feuerfesten keramischen Erzeugnisses, welches die folgenden Schritte umfasst:
- Zur Verfügungstellung eines erfindungsgemäßen Versatzes;
- Vermischen des Versatzes mit Wasser;
- Aufbringen des mit Wasser vermischten Versatzes auf eine Oberfläche;
- Brennen des auf die Oberfläche aufgebrachten Versatzes zu einem ungeformten feuerfesten keramischen Erzeugnis.

Insofern entspricht das erfindungsgemäße Verfahren dem aus dem Stand der Technik bekannten Verfahren zur Herstellung einer Spritzmasse und deren Aufbringen auf die Oberfläche eines Ofenbereiches, um diesen zu pflegen oder zu reparieren.

Dabei wird der erfindungsgemäße Versatz zunächst zur Verfügung gestellt und zur Herstellung einer Spritzmasse mit Wasser vermischt. Diese Spritzmasse wird anschließend auf eine Oberfläche aufgetragen, insbesondere also beispielsweise einen zu pflegenden oder zu reparierenden Bereich der feuerfesten Zustellung eines Ofens. Der entsprechend auf die Oberfläche aufgebrachte Versatz wird anschließend zu einem feuerfesten keramischen Erzeugnis gebrannt, indem der Ofen aufgeheizt wird und der Versatz hierdurch derart mit Temperatur beaufschlagt wird, dass der Versatz versintert und zu einem feuerfesten keramischen Erzeugnis gebrannt wird.

Vor dem Verarbeiten des Versatzes wird der Versatz mit Wasser gemischt, beispielsweise in einer Mischdüse. Durch Vermischen des Versatzes mit Wasser wird eine Spritzmasse erhalten, die beim Aufspritzen auf eine Oberfläche nur einen geringen Rückprall aufweist und zu weiten Teilen auf der Oberfläche haften bleibt.

Der Versatz kann mit einem Anteil an Wasser im Bereich von beispielsweise 1 bis 15 Masse-% gemischt werden, also beispielsweise auch mit einem Anteil von wenigstens 2, 3 oder 4 Masse-% und beispielsweise mit einem Anteil von höchstens 14,13, 12, 11, 10, 9, 8, 7 oder 6 Masse-%, jeweils bezogen auf die Gesamtmasse des Versatzes ohne das Wasser.

Die wasserlöslichen chemischen Bindemittel im Versatz härten nach dem Vermischen des Versatzes mit Wasser aus, so dass der auf die Oberfläche aufgebrachte beziehungsweise aufgespritzte, mit Wasser angemachte Versatz auf der Oberfläche aushärtet.

Der auf die Oberfläche aufgebrachte Versatz wird durch das Aufheizen des Ofens mit Temperatur beaufschlagt und dabei einem keramischen Brand unterworfen. Insbesondere wird der Versatz mit einer solchen Temperatur beaufschlagt, dass die Rohstoffe der Grundkomponente versintern und der Versatz durch den keramischen Brand daher zu einem feuerfesten keramischen Körper versintert. Bevorzugt kann der Versatz mit einer Temperatur im Bereich von 1.250 bis 1.750°C beaufschlagt werden.

Besonders bevorzugt kann das erfindungsgemäße Verfahren zum Aufbringen des mit Wasser angemachten, erfindungsgemäßen Versatzes auf eine Oberfläche eines Konverters, einer Pfanne oder eines Elektrolichtbogenofen verwendet werden.

Weitere Merkmale der Erfindung ergeben sich aus den Ansprüchen sowie dem nachfolgend beschriebenen Ausführungsbeispiel der Erfindung.

Sämtliche Merkmale der Erfindung können, einzeln oder in Kombination, beliebig miteinander kombiniert sein.

Ein Ausführungsbeispiel der Erfindung wird nachfolgend näher beschrieben.

Gegenstand des Ausführungsbeispiels ist ein Versatz zur Herstellung eines ungeformten feuerfesten keramischen Erzeugnisses in Form einer Spritzmasse.

Der Versatz wies die folgenden Komponenten in den folgenden Massenanteilen auf, jeweils bezogen auf die Gesamtmasse des Versatzes:
Eine Grundkomponente in Form von Sintermagnesia: 92,65 Masse-%;
Eine Komponente in Form wenigstens eines chemisch modifizierten Stärkeethers in Form des folgenden chemisch modifizierten Stärkeethers: Hydroxyalkyl-Carboxyalkyl-Stärkeether: 0,15 Masse-%;

Eine Komponente in Form wenigstens eines wasserlöslichen chemischen Bindemittels in Form der zwei folgenden wasserlöslichen chemischen Bindemittel:
Wasserglas: 3,5 Masse-%; und
Aluminium-Sulfat: 1,0 Masse-%;

Eine Komponente in Form von Ton in Form von alumosilikatischem Ton: 2,5 Masse-%;

Eine Komponente in Form von Fasern in Form von Zellulosefasern: 0,2 Masse-%.

In diesem Versatz lagen Calciumoxid und Kohlenstoff in den folgenden Massenanteilen vor:

| | |
|---|---|
| Calciumoxid: | 3,1 Masse-%; |
| Kohlenstoff: | unter 0,1 Masse-%. |

Ferner lagen die folgenden Oxide jeweils in den folgenden Massenanteilen im Versatz vor:

| | |
|---|---|
| MgO: | 89,4 Masse-%; |
| SiO₂: | 5,5 Masse-%; |
| Fe₂O₃: | 0,5 Masse-%; |
| Al₂O₃: | 0,8 Masse-%; |
| Cr₂O₃: | unter 0,1 Masse-%; |
| Na₂O: | 0,7 Masse-%. |

Aus dem entsprechend zur Verfügung gestellten Versatz wurde anschließend eine Spritzmasse hergestellt und diese zur Reparatur eines Elektrolichtbogenofens (EAF) auf dessen feuerfeste Zustellung aufgespritzt.

Hierfür wurde der Versatz zunächst in Form einer trockenen Mischung in eine Spritzmaschine eingegeben und über einen Schlauch mittels Pressluft zu einer Spritzlanze befördert. In der Spritzlanze wurde Wasser in einem Anteil von 15 Masse-%, bezogen auf den Versatz ohne das Wasser, in den Versatz eingedüst. Durch die entsprechende Eindüsung des Wassers in den Versatz wurde eine Spritzmasse erhalten. Die entsprechend erhaltene Spritzmasse wurde über die Spritzlanze auf die zu reparierende feuerfeste Zustellung des EAF aufgespritzt. Dabei wies die Spritzmasse nur einen sehr geringen Rückprall von etwa 15 % auf. Auf Grund des Wassers setzte eine Härtungsreaktion der wasserlöslichen chemischen Bindemittel des Versatzes ein, so dass die auf die feuerfeste Zustellung aufgespritzte Spritzmasse aushärtete. Anschließend wurde der EAF aufgeheizt, wodurch die ausgehärtete Spritzmasse mit einer Temperatur von etwa 1.660°C beaufschlagt wurde und die Sintermagnesia dabei derart versinterte, dass aus der Spritzmasse ein gesintertes basisches feuerfestes keramisches Erzeugnis erhalten wurde.

## Patentansprüche

1. Versatz zur Herstellung eines ungeformten feuerfesten keramischen Erzeugnisses, welcher die folgenden Merkmale aufweist:
1.1 Der Versatz umfasst die folgenden Komponenten:
1.1.1 wenigstens 60 Masse-% einer Grundkomponente in Form wenigstens eines Rohstoffes auf Basis Magnesia;
1.1.2 eine Komponente in Form wenigstens eines chemisch modifizierten Stärkeethers;
1.1.3 eine Komponente in Form wenigstens eines wasserlöslichen chemischen Bindemittels;
1.2 der Versatz umfasst die folgenden Stoffe in den folgenden Massenanteilen:
1.2.1 unter 10 Masse-% Calciumoxid;
1.2.2 unter 10 Masse-% Kohlenstoff.

2. Versatz nach Anspruch 1 mit einer Grundkomponente in Form wenigstens eines der folgenden Rohstoffe: Sintermagnesia oder Schmelzmagnesia.

3. Versatz nach wenigstens einem der vorhergehenden Ansprüche mit einem Anteil der Grundkomponente im Bereich von 60 bis 98 Masse-%.

4. Versatz nach wenigstens einem der vorhergehenden Ansprüche mit einer Komponente in Form des wenigstens einen chemisch modifizierten Stärkeethers in Form wenigstens einer der folgenden chemisch modifizierten Stärkeether: Hydroxyalkyl-Stärkeether, Carboxyalkyl-Stärkeether, Hydroxyalkyl-Carboxyalkyl-Stärkeether, Carbamoyl-Stärkeether, Cyanoalkyl-Stärkeether.

5. Versatz nach wenigstens einem der vorhergehenden Ansprüche mit einem Anteil der Komponente in Form des wenigstens einen chemisch modifizierten Stärkeethers im Bereich von 0,01 bis 1,0 Masse-%.

6. Versatz nach wenigstens einem der vorhergehenden Ansprüche mit einer Komponente in Form des wenigstens einen wasserlöslichen chemischen Bindemittels in Form wenigstens eines der folgenden Bindemittel: wenigstens ein wasserlösliches Sulfat, wenigstens ein wasserlösliches Phosphat oder wenigstens ein wasserlösliches Silikat.

7. Versatz nach wenigstens einem der vorhergehenden Ansprüche mit einer Komponente in Form wenigstens eines Tons.

8. Versatz nach wenigstens einem der vorhergehenden Ansprüche mit einer Komponente in Form von Fasern.

9. Verfahren zur Herstellung eines ungeformten feuerfesten keramischen Erzeugnisses, welches die folgenden Schritte umfasst:
9.1 Zur Verfügungstellung eines Versatzes nach wenigstens einem der vorhergehenden Ansprüche;
9.2 Vermischen des Versatzes mit Wasser;
9.3 Aufbringen des mit Wasser vermischten Versatzes auf eine Oberfläche;
9.4 Brennen des auf die Oberfläche aufgebrachten Versatzes zu einem ungeformten feuerfesten keramischen Erzeugnis.

## Claims

1. A batch for producing an unshaped refractory ceramic product which has the following features:
1.1 The batch comprises the following components:
1.1.1 at least 60 mass % of a main component in the form of at least one raw material based on magnesia;
1.1.2 a component in the form of at least one chemically modified starch ether;
1.1.3 a component in the form of at least one water-soluble chemical binder;
1.2 the batch comprises the following substances in the following mass proportions:
1.2.1 less than 10 mass % calcium oxide;
1.2.2 less than 10 mass % carbon.

2. The batch according to claim 1 with a main component in the form of at least one of the following raw materials: sintered magnesia or fused magnesia.

3. The batch according to at least one of the preceding claims with a proportion of the main component in the range of from 60 to 98 mass %

4. The batch according to at least one of the preceding claims with a component in the form of the at least one chemically modified starch ether in the form of at least one of the following chemically modified starch ethers: hydroxyalkyl starch ether, carboxyalkyl starch ether, hydroxyalkyl-carboxyalkyl starch ether, carbamoyl starch ether, cyanoalkyl starch ether.

5. The batch according to at least one of the preceding claims with a proportion of the component in the form of the at least one chemically modified starch ether in the range of from 0.01 to 1.0 mass %.

6. The batch according to at least one of the preceding claims with a component in the form of the at least one water-soluble chemical binder in the form of at least one of the following binders: at least one water-soluble sulphate, at least one water-soluble phosphate, or at least one water-soluble silicate.

7. The batch according to at least one of the preceding claims with a component in the form of at least one clay.

8. The batch according to at least one of the preceding claims with a component in the form of fibres.

9. A method for producing an unshaped refractory ceramic product comprising the following steps:
9.1 providing a batch according to at least one of the preceding claims;
9.2 mixing the batch with water;
9.3 applying the batch mixed with water to a surface;
9.4 firing the batch applied to the surface to form an unshaped refractory ceramic product.

## Revendications

1. Composition destinée à fabriquer un produit céramique réfractaire informe, laquelle comporte les caractéristiques suivantes :
1.1 La composition comprend les composants suivants :
1.1.1 au moins 60 % en masse d'un composant de base sous la forme d'au moins une matière première sur base de magnésie ;
1.1.2 un composant sous la forme d'au moins un éther d'amidon chimiquement modifié ;
1.1.3 un composant sous la forme d'au moins un agent liant chimique hydrosoluble ;
1.2 la composition comprend les substances suivantes, dans les parts en masse suivantes :
1.2.1 moins de 10 % en masse d'oxyde de calcium ;
1.2.2 moins de 10 % en masse carbone.

2. Composition selon la revendication 1, comprenant un composant de base sous la forme d'au moins l'une des matières premières suivantes : magnésie frittée ou magnésie fondue.

3. Composition selon au moins l'une quelconque des revendications précédentes, comprenant une part du composant de base de l'ordre de 60 à 98 % en masse.

4. Composition selon au moins l'une quelconque des revendications précédentes comprenant un composant sous la forme de l'au moins un éther d'amidon chimiquement modifié, sous la forme d'au moins l'un des éthers d'amidon chimiquement modifiés suivants : éther d'hydroxyalkyle amidon, éther de carboxyalkyle amidon, éther d'hydroxyalkyle-carboxyalkyle amidon, éther de carbamoyle amidon, éther de cyanoalkyle amidon.

5. Composition selon au moins l'une quelconque des revendications précédentes, comprenant une part du composant sous la forme de l'au moins un éther d'amidon chimiquement modifié dans l'ordre de 0,01 à 1,0 % en masse.

6. Composition selon au moins l'une quelconque des revendications précédentes, comprenant un composant sous la forme de l'au moins un agent liant chimique hydrosoluble sous la forme d'au moins l'un des agents liants suivants : au moins un sulfate hydrosoluble, au moins un phosphate hydrosoluble ou au moins un silicate hydrosoluble.

7. Composition selon au moins l'une quelconque des revendications précédentes, comprenant un composant sous la forme d'au moins une argile.

8. Composition selon au moins l'une quelconque des revendications précédentes comprenant un composant sous la forme de fibres.

9. Procédé de fabrication d'un produit céramique réfractaire informe, lequel comporte les étapes suivantes, consistant à :
9.1 mettre à disposition une composition selon au moins l'une quelconque des revendications précédentes ;
9.2 mélanger la composition avec de l'eau ;
9.3 appliquer la composition mélangée à de l'eau sur une surface
9.4 faire cuire la composition appliquée sur la surface en un produit céramique réfractaire informe.
